# EUROPÄISCHE PATENTSCHRIFT

(11) **EP 0 510 231 B1**
(45) Veröffentlichungstag und Bekanntmachung des Hinweises auf die Patenterteilung: **08.02.1995**
(21) Anmeldenummer: 91106722.1
(22) Anmeldetag: 25.04.1991
(51) Int. Cl.: B27D 5/00

(54) **Einrichtung zum Anleimen von streifen- oder bandförmigem Kantenmaterial an plattenförmige Werkstücke**
Apparatus for glueing edge strips to flat material
Appareil pour le collage de bordures en ferme de ruban ou de bande sur des matériaux en forme de plaques

(43) Veröffentlichungstag der Anmeldung: 28.10.1992
(73) Patentinhaber: HOMAG MASCHINENBAU AG, D-72296 Schopfloch (DE)
(72) Erfinder: Kalmbach, Kurt, W-7296 Glatten (DE); Rathgeber, Peter, W-7295 Dornstetten (DE); Gauss, Achim, W-7290 Freudenstadt-Dietersweiler (DE)
(74) Vertreter: Kohlmann, Karl Friedrich, Dipl.-Ing.

(56) Entgegenhaltungen:
- EP-A- 0 276 358
- DE-A- 1 914 358
- DE-A- 3 517 165
- DE-A- 3 517 194
- DE-A- 3 914 461
- FR-A- 2 590 193
- US-A- 3 190 783

## Beschreibung

Die vorliegende Erfindung betrifft eine Einrichtung zum Anleimen von streifen- oder bandförmigem Kantenmaterial an hinsichtlich der Kontur fertig formgefrästen Kanten von plattenförmigen Werkstücken,
- mit einem feststehenden Arbeitstisch, auf den die Werkstücke aufspannbar sind,
- einem Trägerkörper, der über eine Schlitten- und Führungsanordnung entlang der Werkstückkante um das Werkstück herum führbar und über einen numerisch gesteuerten Stellmotor um eine senkrecht zur Werkstückebene ausgerichtete Schwenkachse in Abhängigkeit der Kontur der Werkstückkante verschwenkbar ist,
- einer zum Anpressen des Kantenmaterials an die Werkstückkante eingerichteten Druckrolle, deren Drehachse prallel zur Schwenkachse des Trägerkörpers verläuft, wobei die Druckrolle an dem Trägerkörper angeordnet und in einer Geradführung radial in Grenzen gegen einen nachgiebigen Widerstand verschiebbar geführt ist, und
- einer Zuführeinrichtung und einer Kappeinrichtung für das Kantenmaterial sowie einer Einrichtung zum Aufbringen und/oder Aktivieren eines Klebstoffes, welche Einrichtungen auf den Trägerkörper im Bereich der Druckrolle angeordnet sind.

Einrichtungen dieser Art werden in der Fachwelt allgemein als sogenannte Bearbeitungszentren bezeichnet. Im Gegensatz zu sogenannten Durchlaufmaschinen, bei denen die Werkstücke entlang einer geradlinigen Bearbeitungsstrecke bewegt und im Verlaufe dieser Bewegung zur Durchführung von hintereinander geschalteten Bearbeitungsvorgängen an den Bearbeitungsaggregaten vorbeibewegt werden, liegen die Werkstücke bei Bearbeitungszentren auf einem feststehenden Arbeitstisch fest, während die Bearbeitungsaggregate um die festliegenden Werkstücke herumgeführt werden.

Diese Vorgehensweise erlaubt eine wirtschaftliche Fertigung kleiner Losgrößen und die Bearbeitung schwieriger Formen bei hoher Bearbeitungsgenauigkeit und exakter Reproduzierbarkeit. Zudem ist mit derartigen Bearbeitungszentren ein hoher Automatisierungsgrad möglich und der Platzbedarf gegenüber Durchlaufmaschinen äußerst gering.

Bei bekannten Einrichtungen der gattungsgemäßen Art (vgl. beispielsweise DE-OS 39 14 461) ist die Druckrolle an einer Geradführung gelagert. Diese Geradführung ist mit einer Druckfeder ausgestattet, die die Andruckkraft für die Druckrolle beim Andruckvorgang an das Werkstück erzeugt. Die Geradführung ist fest an einem Schwenkarm befestigt, der bei dieser bekannten Einrichtung den Trägerkörper bildet. Dieser Schwenkarm oder Trägerkörper wird beim Anleimvorgang um das Werkstück herumgeführt und dabei um die Drehachse der Druckrolle oder eine dazu parallele Achse verschwenkt.

Aufgabe der vorliegenden Erfindung ist es, eine Einrichtung der gattungsgemäßen Art derart weiterzubilden, daß auch bei komplizierten Werkstückkonturen eine Verbesserung der Anleimqualität erreicht wird.

Diese Aufgabe wird erfindungsgemäß dadurch gelöst,
- daß die Drehachse der Druckrolle in einem Abstand von der Schwenkachse des Trägerkörpers auf der dem Werkstück gegenüberliegenden Seite der Schwenkachse angeordnet ist, und
- daß die Geradführung der Druckrolle in eine vom Trägerkörper unabhängige Schlitteneinheit integriert ist, die um eine in der Schwenkachse des Trägerkörpers liegende Achse frei verschwenkbar derart gelagert ist, daß sich die Drehachse der Druckrolle selbsttätig stets in eine senkrecht zur Werkstückkante bzw. senkrecht zur Tangente an die Werkstückkante ausgerichtete und durch die Schwenkachse des Trägerkörpers verlaufende Achsenebene einstellt.

Der Erfindung liegt die Erkenntnis zugrunde, daß es zur Erzielung einer gleichmäßig hohen Anleimqualität in erster Linie erforderlich ist, daß das Kantenmaterial zum einen an jeder Stelle möglichst mit einem optimalen Einlaufwinkel zur Werkstückkante zugeführt und zum anderen durch die Druckrolle stets mit einer konstanten Anpreßkraft an die Werkstückkante angepreßt wird.

Durch die erfindungsgemäßen Merkmale stellt sich nun die Druckrolle aufgrund ihrer Lagerung in der vom Trägerkörper unabhängigen Schlitteneinheit in Verbindung mit der speziellen Anordnung der Drehachse zur Schwenkachse stets selbsttätig in die Achsenebene ein, so daß das Kantenmaterial durch die Druckrolle unabhängig von der Stellung des Trägerkörpers an jeder Stelle der Kontur mit einer konstanten Anpreßkraft an die Werkstückkante angepreßt wird.

Aufgrund dieser selbsttätigen Einstellung wiederum kann die C-Achse der numerischen Steuerung allein für die Verschwenkbewegung des Trägerkörpers und damit zur Steuerung des optimalen Einlaufwinkels des Kantenmaterials eingesetzt werden, ohne daß dabei auf die Stellung der Geradführung und damit auf die Wirkrichtung der Anpreßkraft für die Druckrolle Rücksicht genommen werden müßte.

Eine Verbesserung der Anleimqualität wird zusätzlich durch die Anordnung einer achsparallel neben der Druckrolle angeordneten Nachdruckrolle erreicht, die an einem Ende eines Hebels drehbar gelagert ist, dessen anderes Ende um die Schwenkachse des Trägerkörpers verschwenkbar gelagert ist.

Derartige Nachdruckrollenanorndungen sind beispielsweise aus der DE-OS 39 14 461 bekannt. Vorteilhaft ist es jedoch bei einer derartigen Anordnung, den Hebel mit einem Zahnkranz auszustatten, der mit einem Zahrad kämmt, mit welchem eine Zahnstange in Eingriff steht, die über einen Druckzylinder verschiebbar ist. Eine derartige Anordnung ist technisch einfach aufgebaut, betriebssicher und in der Lage, eine gleichmäßige Nachdruckkraft auch bei komplizierter Werkstückkontur zu erzeugen.

Zur Erzeugung des nachgiebigen Widerstandes der Druckrolle und damit zur Erzeugung der Anpreßkraft zum Anpressen des Kantenmaterials an die Werkstückkante muß die Einrichtung mit einer Andruckeinrichtung ausgestattet sein. Bekannt ist es (vgl. DE-OS 39 14 461), die Andruckeinrichtung als mechanische Federanordnung aufzubauen. Um auch über längere Wege eine konstante Andruckkraft zu erzielen, ist es jedoch vorteilhaft, die Andruckeinrichtung als pneumatische Federanordnung aufzubauen.

Zur Bearbeitung von Werkstücken, bei denen das streifen- oder bandförmige Kantenmaterial über den gesamten Umfang angeleimt und im Stoßbereich keine Lücke zwischen den Enden des Kantenmaterials auftreten soll, ist es vorteilhaft, daß auf dem Trägerkörper ein Kantenstoßsensor angeordnet wird, der mit der Kappeinrichtung für das Kantenmaterial zur Auslösung eines Kappvorganges in Verbindung steht. Der Kantenstoßsensor kann ein mechanisch-elektrischer oder ein optisch-elektrischer Sensor sein. Eine derartige Anordnung hat den Vorteil, daß das Kantenmaterial hinsichtlich seiner Länge stets speziell für das jeweilige Werkstück bemessen wird, so daß sich Unterschiede in der Umfangslänge nicht in Form von Stoßlücken oder Überlappungen auswirken können.

Grundsätzlich kann der Trägerkörper in jeder beliebigen Weise an der Schlitten- und Führungsanordnung gelagert sein. Vorteilhaft ist es jedoch, wenn der Trägerkörper über eine Lagerbüchse an der Schlitten- und Führungsanordnung gelagert ist, deren Achse die Schwenkachse bildet.

Wird bei einer derartigen Anordnung der Innendurchmesser der Lagerbüchse derart groß bemessen, daß eine Antriebswelle für die Druckrolle durch die Lagerbüchse hindurchführbar ist, so ergibt sich ein technisch einfacher und vorteilhafter Aufbau.

Um Drehzahlunterschiede auszugleichen, ist es vorteilhaft, wenn die Antriebswelle mit der Druckrolle über eine Rutschkupplung verbunden ist.

Grundsätzlich kann die Nachdruckrolle in jeder beliebigen Weise gelagert sein. Vorteilhaft ist es jedoch, wenn im Falle der Anordnung einer Lagerbüchse auf deren Außenseite Lagermittel für den Hebel der Nachdruckrolle angeordnet sind.

Gemäß einer bevorzugten Ausführungsform kann der Hebel an seinem der Nachdruckrolle entgegengsetzten Ende einen Lagerring tragen, der auf den Lagermitteln der Lagerbüchse gelagert ist und auf seiner Außenseite den Zahnkranz für das Zahnrad der Nachdruckeinrichtung trägt.

Mit einer Einrichtung der erfindungsgemäßen Art kann bei entsprechender Anpassung jede Art von Kantenmaterial verarbeitet werden. So können mit der erfindungsgemäßen Vorrichtung Kanten aus Holz oder Kunststoff in Rollen- oder Streifenware bis zu einer Schicht von ca. 9 mm oder auch sogenannte Stegkanten verarbeitet werden. Sollen Stegkanten verarbeitet werden, ist es lediglich erforderlich, auf dem Trägerkörper eine entsprechende Zuführeinrichtung für die Stegkanten vorzusehen. Sollen relativ kleine Radien mit Stegkanten versehen werden, ist es vorteilhaft, auf dem Trägerkörper eine Stanz- oder Schneideinrichtung zum Ausklinken des Steges der Stegkanten anzuordnen.

Im Normalfall wird die Kappeinrichtung stets senkrecht zur Erstreckungsrichtung der Kanten ausgebildete Schnitte ausführen. Zur Ausbildung von sogenannten geschäfteten Kantenstößen kann die Kappeinrichtung jedoch auch auf dem Trägerkörper schräggestellt angeordnet sein.

Um dauerhafte und qualitativ hochwertige Kantenstöße auszubilden, ist es gemäß einer besonderen Weiterbildung der Erfindung vorteilhaft, die Stirnkanten des Kantenmaterials unter einer Vorspannung am Kantenstoß zusammenzufügen. Zu diesem Zweck ist es vorteilhaft, die Zuführeinrichtung für das Kantenmaterial mit einer Vorrichtung zur Ausbildung einer Welle am Kantenmaterialende auszustatten. In einem solchen Falle wird das Kantenmaterial über den Kantenstoßsensor in einem ersten Schritt mit einer genau bemessenen Überlänge durch die Kappeinrichtung geschnitten. Durch die spezielle Vorrichtung zur Ausbildung einer Welle wird dann das Kantenmaterial in einem zweiten Schritt im Stoßbereich stirnseitig aneinandergefügt und das daran anschließende Kantenmaterial von der Werkstückkante bogenartig abgehalten. Die Vorrichtung zur Ausbildung der Welle ist zu diesem Zweck mit mindestens einem Greifer ausgestattet, mit dem das Kantenmaterial bogenartig von der Werkstückkante im Abstand gehalten werden kann. Ferner besitzt die Vorrichtung zu diesem Zweck mindestens eine Rolle, mit der das Kantenmaterial im Stoßbereich zur Ausbildung des Bogenendes an die Werkstückkante angedrückt wird. In einem dritten Schritt wird dann über die Druckrolle und die Nachdruckrolle die Welle oder der Bogen in die Ebene der Werkstückkante gepreßt, wodurch sich im Stoßbereich eine Vorspannungskraft ergibt, die den Stoß dauerhaft schließt.

Im folgenden ist zur weiteren Erläuterung und zum besseren Verständnis ein Ausführungsbeispiel der Erfindung unter Bezugnahme auf die beigefügten Zeichnungen näher beschrieben und erläutert.
- Fig. 1: zeigt schematisch ein Ausführungsbeispiel in einer Draufsicht,
- Fig. 2: zeigt schematisch einen Schnitt in der Ebene II-II der Fig. 1, und
- Fig. 3: zeigt schematisch einen Teil des Ausführungsbeispieles nach den Fig. 1 und 2 im Einsatz an einem mit einer Ausbuchtung ausgestatteten Werkstück.

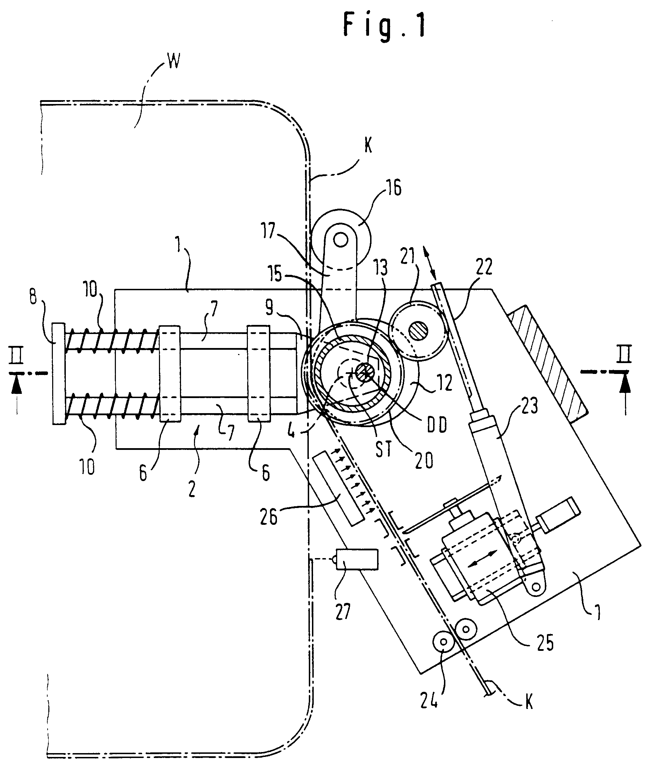

Wie eingangs bereits erwähnt, ist bei einem sogenannten Bearbeitungszentrum das Werkstück W auf einem feststehenden Arbeitstisch aufgespannt. Der besseren Übersicht halber ist in den Fig. 1 bis 3 lediglich das Werkstück W, nicht aber der feststehende Arbeitstisch, dargestellt.

Wesentlicher Bestandteil der erfindungsgemäßen Einrichtung ist ein Trägerkörper 1. Dieser Trägerkörper 1 wird bei Bearbeitungszentren über eine Schlitten- und Führungsanordnung entlang der Werkstückkante um das Werkstück W herumgeführt. Diese Schlitten- und Führungsanordnung ist der besseren Übersicht halber in den Fig. 1 bis 3 ebenfalls nicht dargestellt.

Beim Herumführen des Trägerkörpers 1 um das Werkstück W wird der Trägerkörper über einen numerisch gesteuerten Stellmotor um eine senkrecht zur Werkstückebene ausgerichtete Schwenkachse verschwenkt. Diese Schwenkachse ist in den Fig. 1 bis 3 mit ST bezeichnet. Der Stellmotor und die Elemente der numerischen Steuerung sind in den Fig. 1 bis 3 ebenfalls nicht dargestellt.

Auf dem Trägerkörper 1 ist eine Schlitteneinheit 2 gelagert. Diese besteht aus einer Schlittenplatte 3, die über einen Lagerzapfen 4 und ein Lager 5 in dem Trägerkörper 1 gelagert ist.

Auf der Schlittenplatte 3 sind Lagerböcke 6 befestigt, in denen Führungsstangen 7 parallel zur Ebene des Werkstückes W verschiebbar geführt sind. diese Führungsstangen 7 sind an einem Ende über eine Endplatte 8 und am anderen Ende über ein Joch 9 miteinander verbunden.

Auf den Führungsstangen 7 sind zwischen der Endplatte 8 und dem der Endplatte benachbarten Lagerbock 6 Druckfedern 10 angeordnet.

Auf dem Joch 9 der Schlitteneinheit 2 ist ein Lagerzapfen 11 befestigt, der eine Druckrolle 12 trägt. Diese Druckrolle 12 wird von einer Antriebswelle 13 über eine Rutschkupplung 14 angetrieben.

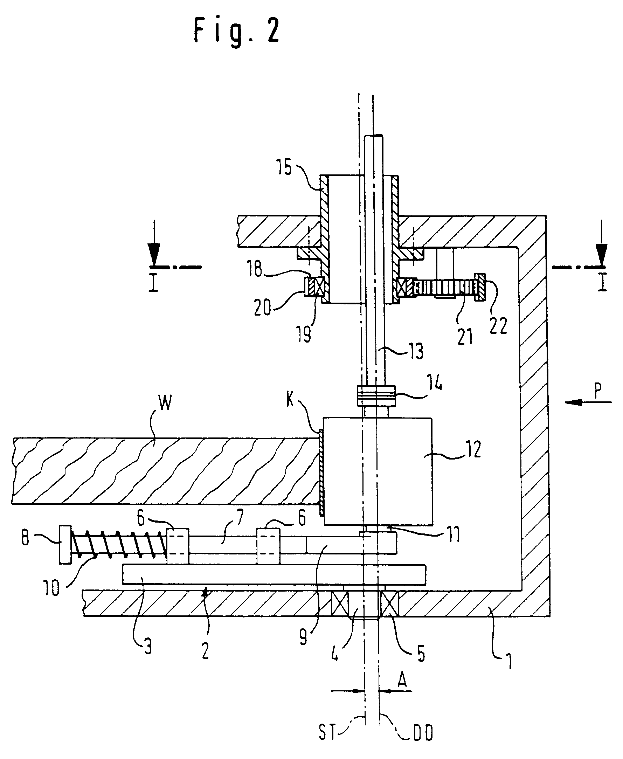

Wie aus Fig. 2 hervorgeht, ist die Anordnung derart getroffen, daß die Drehachse DD der Druckrolle 12 in einem Abstand A gegenüber der Schwenkachse ST des Trägerkörpers 1 angeordnet ist. Die Drehachse DD der Druckrolle 12 befindet sich dabei in bezug auf die Schwenkachse ST des Tragerkörpers 1 auf der dem Werkstück entgegengesetzten Seite.

Die auf den Führungsstangen 7 angeordneten Druckfedern 10 bilden eine mechanische Federanordnung einer Andruckeinrichtung. Diese Andruckeinrichtung erzeugt einen nachgiebigen Widerstand beim Anpressen der Druckrolle 12 an das Kantenmaterial K des Werkstückes W.

Wird also der Trägerkörper 1 gegenüber dem Werkstück W in Richtung des Pfeiles P (vgl. Fig. 2) bewegt, so erzeugen die Federn 10 der mechanischen Federanordnung die Andruckkraft der Druckrolle 12 zum Anpressen des Kantenmaterials K an die Werkstückkante des Werkstückes W. Aufgrund des Abstandes A zwischen der Drehachse DD der Druckrolle 12 und der Schwenkachse ST des Trägerkörpers 1, die gleichzeitig die Schwenkachse für die Schlitteneinheit 2 bildet, stellen sich die Führungsstangen 7 der Schlitteneinheit 2 stets senkrecht zur Werkstückkante bzw. senkrecht zur Tangente an die Werkstückkante ein, so daß durch die Druckrolle 12 stets der durch die Federn 10 der Federanordnung erzeugte Anpreßdruck auf das Kantenmaterial K einwirkt.

Wie aus Fig. 2 ferner hervorgeht, ist der Trägerkörper 1 mit einer Lagerbüchse 15 ausgestattet. Die Achse der Lagerbüchse 15 verläuft genau in der Schwenkachse ST des Trägerkörpers. Über die Lagerbüchse 15 ist der Trägerköper an der eingangs erwähnten, nicht dargestellten Schlitten- und Führungsanordnung gelagert. Über die Lagerbüchse 15 wird darüber hinaus der Trägerkörper 1 über den nicht dargestellten numerisch gesteuerten Stellmotor beim Herumführen um das Werkstück W verschwenkt.

Wie aus Fig. 2 ferner hervorgeht, ist der Innendurchmesser der Lagerbüchse 15 derart bemessen, daß die Antriebswelle 13 der Druckrolle 12 durch die Lagerbüchse 15 hindurchgeführt werden kann.

Wie aus Fig. 1 hervorgeht, ist in Arbeitsrichtung hinter der Druckrolle 12 achsparallel zu dieser eine Nachdruckrolle 16 vorgesehen. Diese nachlaufende Nachdruckrolle 16 ist an einem Ende eines Hebels 17 drehbar gelagert, dessen anderes Ende einen Lagerring 18 trägt, der über Lagermittel 19 auf der Lagerbüchse 15 drehbar gelagert ist.

Der Lagerring 18 ist auf seiner Außenseite mit einem Zahnkranz 20 ausgestatte, in den ein Zahnrad 21 eingreift, welches auf dem Trägerkörper 1 drehbar gelagert ist.

Das Zahnrad 21 steht mit einer Zahnstange 22 in Eingriff, welche über einen Druckzylinder 23 hin- und herverschiebbar ist. Somit kann über den Druckzylinder 23 und die eben beschriebenen Getriebeglieder die der Druckrolle 12 nachlaufende Nachdruckrolle 16 mit einer vorgegebenen Nachdruckkraft an das bereits durch die Druckrolle 12 an das Werkstück W angepreßte Kantenmaterial K angelegt werden.

Wie aus Fig. 1 hervorgeht, ist auf dem Trägerkörper ferner eine lediglich schematisch dargestellte Zuführeinrichtung 24 sowie eine Kappeinrichtung 25 für das Kantenmaterial K, eine Einrichtung 26 zum Aufbringen und/oder Aktivieren eines Klebstoffes sowie ein Kantenstoßsensor 27 angeordnet. Dieser Kantenstoßsensor 27, der ein mechanisch-elektrischer oder optisch-elektrischer Sensor sein kann, steht über eine nicht dargestellte elektronische Steuerung mit der Kappeinrichtung 25 in Verbindung.

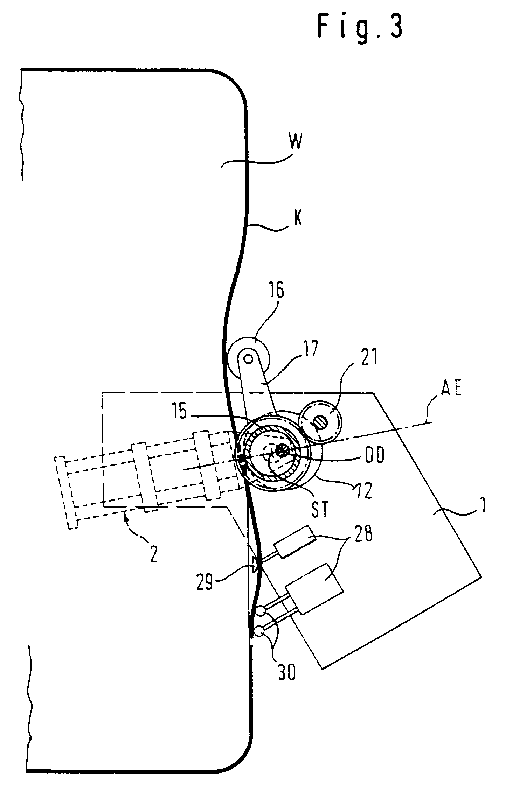

Wie aus Fig. 3 hervorgeht, ist auf dem Trägerkörper ferner eine Vorrichtung 28 angeordnet, die lediglich schematisch dargestellte Greifer 29 und Rollen 30 aufweist, deren Funktion später noch beschrieben werden wird.

Soll nun streifen- oder bandförmiges Kantenmaterial K an die fertig formgefräste Kante des plattenförmigen Werkstückes W angeleimt werden, so arbeitet die erfindungsgemäße Einrichtung wie folgt:
Das streifen- oder bandförmige Kantenmaterial K wird über die Zuführeinrichtung 24 an der Einrichtung 26 zum Aufbringen und/oder Aktivieren des Klebstoffes vorbeigeführt und über die Druckrolle 12 an die Kante des Werkstückes W angepreßt. Aufgrund der Lagerung der Druckrolle 12 auf der um die Schwenkachse ST frei verschwenkbaren Schlitteneinheit 2 nimmt die Druckrolle 12 stets unabhängig von der jeweiligen Stellung des Trägerkörpers 1 die optimale Stellung an der Werkstückkante selbsttätig ein. Aufgrund des Abstandes A zwischen der Drehachse DD der Druckrolle und der Schwenkachse ST des Trägerkörpers 1 schwenkt nämlich die Schlitteneinheit 2 selbsttätig um den Lagerzapfen 4 stets in eine senkrecht zur Werkstückkante bzw. senkrecht zur Tangente an die Werkstückkante ausgerichtete Ebene, so daß durch die Druckrolle 12 auf das Kantenmaterial K stets der durch die Federn der mechanischen Druckeinrichtung erzeugte Anpreßdruck einwirken kann. Durch das selbsttätige Einstellen der Schlitteneinheit 2 in diese als Achsenebene AE bezeichnete Ebene wird in jeder Stellung der Druckrolle 12 ein absolut gleichmäßiger Anpreßdruck auf das Kantenmaterial K ausgeübt, was sich positiv auf die Qualität der Leimverbindung auswirkt.

Um die Qualität der Verbindung noch weiter zu erhöhen, läuft der Druckrolle 2 die Nachdruckrolle 16 nach, welche über den Druckzylinder 23 stets mit einem konstanten Anpreßdruck an das Kantenmaterial angepreßt wird.

Ist das Werkstück W von dem Trägerkörper fast vollständig umrundet worden und befindet sich der Trägerkörper 1 in der in Fig. 1 dargestellten Phase, so ertastet der Sensor 27 den Anfang des Kantenmaterials K und gibt ein Signal an die Kappeinrichtung 25. Aufgrund dieses Signales wird das Kantenmaterial durch die Kappeinrichtung 25 präzise derart abgetrennt, daß die durch den Abtrennvorgang gebildete Stirnkante des gerade angeleimten Kantenmaterials dicht neben der Stirnkante des vom Sensor 27 abgetasteten Anfangs des Kantenmaterials zu liegen kommt, und damit ein weitgehend fugenloser Kantenmaterialstoß gebildet wird.

Aufgrund dieser Arbeitsweise wird unabhängig von der Länge der Kontur des Werkstückes W stets ein weitgehend fugenloser Stoß des Kantenmaterials K gebildet.

In Fig. 3 ist schematisch die Herstellung eines besonders dauerhaften und qualitativ hochwertigen Kantenstoßes dargestellt. Der Übersichtlichkeit halber ist in Fig. 3 die Zuführeinrichtung 24 und die Kappeinrichtung 25 für das Kantenmaterial sowie die Einrichtung 26 zum Aufbringen und/oder Aktivieren des Klebstoffes, der Sensor 27 und der Druckzylinder nicht dargestellt. Dargestellt ist lediglich die Vorrichtung 28, welche einerseits über die Rollen 30 das durch die Kappeinrichtung 25 abgelängte Kantenmaterial K im Bereich des Stoßes an das Werkstück W leicht andrückt, andererseits jedoch über einen Greifer 29 den zwischen der Druckrolle 12 und den Rollen 30 befindliche Teil des Kantenmaterials bogenförmig anhebt. Die auf diese Weise gebildete Kantenmaterialwelle wird dann im weiteren Verlauf der Bewegung des Trägerkörpers 1 durch die Druckrolle 12 an die Werkstückkante angepreßt. Zu diesem Zweck wird der Greifer 29 aus dem Zwischenraum zwischen dem Kantenmaterial und der Werkstückkante herausgezogen. Durch das Andrücken der Kantenmaterialwelle durch die Druckrolle 12 werden die Stirnkanten des Kantenmaterials unter einer Vorspannung zusammengepreßt, so daß sich ein besonders dauerhafter und qualitativ hochwertiger Kantenstoß ergibt.

In Gegenüberstellung mit der Fig. 1 ist aus der Fig. 3 auch die freie Verschwenkbewegung der Schlitteneinheit 2 gegenüber dem Trägerkörper 1 und insbesondere dem Werkstück W zu ersehen. Wie bereits beschrieben, stellt sich die Schlitteneinheit 2 aufgrund der durch den Abstand A der beiden Achsen ST und DD (vgl. Fig. 2) erzeugten Rückstellkraft selbsttätig in die Achsenebene AE ein, so daß die Schlitteneinheit stets in einer senkrecht zur Werkstückkante bzw. senkrecht zur Tangente an die Werkstückkante ausgerichteten Stellung steht, aus der die bereits beschriebenen Vorteile resultieren.

## Patentansprüche

1. Einrichtung zum Anleimen von streifen- oder bandförmigem Kantenmaterial an hinsichtlich der Kontur fertig formgefrästen Kanten von plattenförmigen Werkstücken,
- mit einem feststehenden Arbeitstisch, auf den die Werkstücke (W) aufspannbar sind,
- einem Trägerkörper (1), der über eine Schlitten- und Führungsanordnung entlang der Werkstückkante um das Werkstück herum führbar und über einen numerisch gesteuerten Stellmotor um eine senkrecht zur Werkstückebene ausgerichtete Schwenkachse (ST) in Abhängigkeit der Kontur der Werkstückkante verschwenkbar ist,
- einer zum Anpressen des Kantenmaterials (K) an die Werkstückkante eingerichteten Druckrolle (12), deren Drehachse (DD) prallel zur Schwenkachse (ST) des Trägerkörpers (1) verläuft, wobei die Druckrolle an dem Trägerkörper angeordnet und in einer Geradführung radial in Grenzen gegen einen nachgiebigen Widerstand verschiebbar geführt ist, und
- einer Zuführeinrichtung (24) und einer Kappeinrichtung (25) für das Kantenmaterial (K) sowie einer Einrichtung (26) zum Aufbringen und/oder Aktivieren eines Klebstoffes, welche Einrichtungen auf den Trägerkörper (1) im Bereich der Druckrolle (12) angeordnet sind,
dadurch **gekennzeichnet**,
- daß die Drehachse (DD) der Druckrolle (12) in einem Abstand (A) von der Schwenkachse (ST) des Trägerkörpers (1) auf der dem Werkstück (W) gegenüberliegenden Seite der Schwenkachse (ST) angeordnet ist, und
- daß die Geradführung der Druckrolle (12) in eine vom Tragerkörper (1) unabhängige Schlitteneinheit (2) integriert ist, die um eine in der Schwenkachse (ST) des Trägerkörpers liegende Achse frei verschwenkbar derart gelagert ist, daß sich die Drehachse (DD) der Druckrolle (12) selbsttätig stets in eine senkrecht zur Werkstückkante bzw. senkrecht zur Tangente an die Werkstückkante ausgerichtete und durch die Schwenkachse (ST) des Trägerkörpers verlaufende Achsenebene (AE) einstellt.

2. Einrichtung nach Anspruch 1, dadurch **gekennzeichnet,**
- daß achsparallel neben der Druckrolle (12) eine Nachdruckrolle (16) angeordnet ist, die an einem Ende eines Hebels (17) drehbar gelagert ist, dessen anderes Ende um die Schwenkachse (ST) des Trägerkörpers (1) verschwenkbar gelagert ist, und
- daß der Hebel (17) mit einem Zahnkranz (20) ausgestattet ist, mit dem ein Zahnrad (21) kämmt, mit welchem eine Zahnstange (22) in Eingriff steht, die über einen Druckzylinder (23) verschiebbar ist.

3. Einrichtung nach Anspruch 1, dadurch **gekennzeichnet,** daß zur Erzeugung des nachgiebigen Widerstandes der Druckrolle (12) zum Anpressen des Kantenmaterials (K) an die Werkstückkante eine Andruckeinrichtung vorgesehen ist.

4. Einrichtung nach Anspruch 3, dadurch **gekennzeichnet,** daß die Andruckeinrichtung eine mechanische oder pneumatische Federanordnung aufweist.

5. Einrichtung nach Anspruch 1, dadurch **gekennzeichnet,** daß auf dem Trägerkörper (1) ein Kantenstoßsensor (27) angeordnet ist, der mit der Kappeinrichtung (25) für das Kantenmaterial (K) zur Auslösung eines Kappvorganges in Verbindung steht.

6. Einrichtung nach Anspruch 1 oder 2, dadurch **gekennzeichnet,**
- daß der Trägerkörper (1) über eine Lagerbüchse (15) an der Schlitten- und Führungsanordnung gelagert ist, deren Achse die Schwenkachse (ST) bildet, und
- daß der Innendurchmesser der Lagerbüchse (15) derart groß bemessen ist, daß eine Antriebswelle (13) für die Druckrolle (12) durch die Lagerbüchse hindurchführbar ist.

7. Einrichtung nach Anspruch 6, dadurch **gekennzeichnet,** daß die Antriebswelle (13) mit der Druckrolle (12) über eine Rutschkupplung (14) verbunden ist.

8. Einrichtung nach Anspruch 2 und 6, dadurch **gekennzeichnet,** daß die Lagerbüchse (15) auf ihrer Außenseite die Lagermittel (19) für den Hebel (17) der Nachdruckrolle (16) trägt.

9. Einrichtung nach Anspruch 2 und 8, dadurch **gekennzeichnet,** daß der Hebel (17) an seinem der Nachdruckrolle (16) entgegengesetzten Ende einen Lagerring (18) trägt, der auf den Lagermitteln (19) der Lagerbüchse (15) gelagert ist und auf seiner Außenseite den Zahnkranz (20) für das Zahnrad (21) der Nachdruckeinrichtung trägt.

10. Einrichtung nach einem oder mehreren der vorhergehenden Ansprüche, mit einer Zuführeinrichtung (24) für Stegkanten, dadurch **gekennzeichnet,** daß auf dem Trägerkörper (1) eine Stanz- oder Schneideinrichtung zum Ausklinken des Steges angeordnet ist.

11. Einrichtung nach einem oder mehreren der vorangegangenen Ansprüche, dadurch **gekennzeichnet,** daß die Kappeinrichtung (25) auf dem Trägerkörper (1) schrägstellbar ist.

12. Einrichtung nach einem oder mehreren der vorangegangenen Ansprüche, dadurch **gekennzeichnet,** daß die Zuführeinrichtung (24) eine Vorrichtung (28) zur Ausbildung einer Welle am Kantenmaterialende aufweist.

13. Einrichtung nach Anspruch 12, dadurch **gekennzeichnet,** daß die Vorrichtung (28) mindestens einen Greifer (29) zum Imabstandhalten des Kantenmaterials (K) von der Werkstückkante aufweist.

14. Einrichtung nach Anspruch 12 und 13, dadurch **gekennzeichnet,** daß die Vorrichtung (28) mindestens eine Rolle (30) zum Andrücken des Kantenmaterials (K) an die Werkstückkante aufweist.

15. Einrichtung nach Anspruch 5, dadurch **gekennzeichnet,** daß der Kantenstoßsensor (27) ein mechanisch-elektrischer oder optisch-elektrischer Sensor ist.

## Claims

1. Device for gluing on strip-like or ribbon-like edge material at edges of plate-shaped workpieces which are fully profile-cut with respect to the contour, with
- a stationary work bench on which the workpieces (W) can be mounted,
- a carrier body (1) which can be guided around the workpiece along the workpiece edge by means of a carriage and guide assembly and pivoted by means of a numerically controlled servo motor about a pivot axis (ST) which is oriented perpendicularly to the workpiece plane, as a function of the contour of the workpiece edge,
- a pressure roller (12) which is designed to press the edge material (K) against the workpiece edge and of which the axis of rotation (DD) extends parallel to the pivot axis (ST) of the carrier body (1), wherein the pressure roller is arranged on the carrier body and guided in a straight-line mechanism so that it can slide radially within limits against a flexible resistance, and
- a feed device (24) and a trimming device (25) for the edge material (K) as well as a device (26) for applying and/or activating an adhesive, which devices are arranged on the carrier body (1) in the region of the pressure roller (12),
characterised
- in that the axis of rotation (DD) of the pressure roller (12) is arranged at a distance (A) from the pivot axis (ST) of the carrier body (1) on the side of the pivot axis (ST) opposite the workpiece (W), and
- in that the straight-line mechanism of the pressure roller (12) is integrated in a carriage unit (2) which is independent of the carrier body (1) and which is mounted so as to be capable of pivoting freely about an axis located in the pivot axis (ST) of the carrier body in such a way that the axis of rotation (DD) of the pressure roller (12) automatically always adjusts itself to an axial plane (AE) oriented perpendicularly to the workpiece edge or perpendicularly to the tangent to the workpiece edge and passing through the pivot axis (ST) of the carrier body.

2. Device according to claim 1, characterised
- in that arranged with parallel axis adjacent to the pressure roller (12) is a secondary pressure roller (16) which is mounted rotatably at one end of a lever (17) of which the other end is mounted so as to be capable of pivoting about the pivot axis (ST) of the carrier body (1), and
- in that the lever (17) is provided with a ring gear (20) with which meshes a pinion (21) with which engages a rack (22) which is slidable by means of a pressure cylinder (23).

3. Device according to claim 1, characterised in that to produce the flexible resistance of the pressure roller (12) for pressing the edge material (K) against the workpiece edge, a pressure applying device is provided.

4. Device according to claim 3, characterised in that the pressure applying device comprises a mechanical or pneumatic spring assembly.

5. Device according to claim 1, characterised in that on the carrier body (1) is arranged an edge joint sensor (27) which is connected to the trimming device (25) for the edge material (K) to trigger a trimming operation.

6. Device according to claim 1 or 2, characterised
- in that the carrier body (1) is mounted by a bearing bush (15) on the carriage and guide assembly of which the axis forms the pivot axis (ST), and
- in that the inside diameter of the bearing bush (15) is dimensioned such that a drive shaft (13) for the pressure roller (12) can be passed through the bearing bush.

7. Device according to claim 6, characterised in that the drive shaft (13) is connected to the pressure roller (12) by a slip coupling (14).

8. Device according to claims 2 and 6, characterised in that the bearing bush (15) on its outside carries the bearing means (19) for the lever (17) of the secondary pressure roller (16).

9. Device according to claims 2 and 8, characterised in that the lever (17) at its end opposite the secondary pressure roller (16) carries a bearing ring (18) which is mounted on the bearing means (19) of the bearing bush (15) and on its outside carries the ring gear (20) for the pinion (21) of the secondary pressure device.

10. Device according to one or more of the preceding claims, with a feed device (24) for ridge edges, characterised in that on the carrier body (1) is arranged a punching or cutting device for notching the ridge.

11. Device according to one or more of the preceding claims, characterised in that the trimming device (25) can be tilted on the carrier body (1).

12. Device according to one or more of the preceding claims, characterised in that the feed device (24) comprises a device (28) for forming a wave at the end of the edge material.

13. Device according to claim 12, characterised in that the device (28) comprises at least one gripper (29) for keeping the edge material (K) at a distance from the workpiece edge.

14. Device according to claims 12 and 13, characterised in that the device (28) comprises at least one roller (30) for pressing the edge material (K) against the workpiece edge.

15. Device according to claim 5, characterised in that the edge joint sensor (27) is a mechanical-electrical or optoelectrical sensor.

## Revendications

1. Dispositif pour le collage d'un matériau de bordure en forme de ruban ou de bande sur des arêtes de pièces se présentant sous forme de plaques, façonnée à la forme du contour par fraisage et dont le façonnage est achevé,
- avec une table de travail ( ), sur laquelle les pièces à usiner (W) peuvent être bloquées par bridage,
- un corps support (1), pouvant être guidé sur un dispositif à chariot et de guidage, le long de l'arête de la pièce, sur son pourtour, et pouvant être pivoté, par l'intermédiaire d'un servomoteur à commande numérique, autour d'un axe de pivotement (ST) perpendiculaire par rapport au plan de la pièce à usiner, en fonction du contour de l'arête de la pièce,
- un galet presseur (12), monté pour presser le matériau de bordure (K) sur l'arête de la pièce et dont l'axe de rotation (DD) s'étend parallèlement à l'axe de pivotement (ST) du corps support (1), le galet presseur étant disposé sur le corps support et guidé de façon à pouvoir se déplacer radialement dans un guidage rectiligne, dans des limites données, à l'encontre d'une résistance élastique, et
- un dispositif d'amenée (24) et un dispositif de découpage (25) pour le matériau de bordure (K), ainsi qu'un dispositif (26) pour appliquer et/ou activer un adhésif, ces dispositifs étant disposés sur le corps support (1), dans la zone du galet presseur (12),
caractérisé en ce que
- l'axe de rotation (DD) du galet presseur (12) est disposé à une distance (A) vis-à-vis de l'axe de pivotement (ST) du corps support (1), du côté opposé à la pièce à usiner (W) de l'axe de pivotement (ST), et
- en ce que le guidage rectiligne du galet presseur (12) est intégré dans un ensemble à coulisseau (2) indépendant du corps support (1) et monté, de façon à permettre un pivotement libre autour d'un axe passant dans l'axe de pivotement (ST) du corps support, de manière que l'axe de rotation (DD) du galet presseur (12) se place toujours dans un pan d'axe (AE) orienté perpendiculairement à l'arête de la pièce à usiner ou perpendiculairement par rapport à la tangente de l'arête de la pièce à usiner et passant par l'axe de pivotement (ST) du corps support.

2. Dispositif selon la revendication 1, caractérisé en ce qu'
- un galet de repressage (16) est disposé avec son axe parallèle au, et à côté du, galet presseur (12) et monté à rotation à un extrémité d'un levier (17), dont l'autre extrémité est montée à pivotement autour de l'axe de pivotement (ST) du corps support (1), et
- en ce que le levier (17) est équipé d'un couronne dentée (20), sur laquelle s'engrène une roue dentée (21), avec laquelle s'engrène une crémaillère (22), pouvant coulisser par l'intermédiaire d'un vérin à pression (23).

3. Dispositif selon la revendication 1, caractérisé en ce qu'un dispositif de pressage est prévu, pour produire la résistance élastique du galet presseur (12), en vue de presser le matériau de bordure (K) sur l'arête de la pièce.

4. Dispositif selon la revendication 3, caractérisé en ce que le dispositif de pressage présente un agencement à ressort mécanique ou pneumatique.

5. Dispositif selon la revendication 1, caractérisé en ce qu'un capteur de joint d'arête (27), relié au dispositif de découpage (25) destiné au matériau de bordure (K), en vue de déclencher un processus de découpage, est disposé sur le corps support.

6. Dispositif selon la revendication 1 ou 2, caractérisé en ce que
- le corps support (1) est monté sur le dispositif à chariot et de guidage, dont l'axe constitue l'axe de pivotement (ST), par l'intermédiaire d'une douille de palier (15), et
- en ce que le diamètre intérieur de la douille de palier (15) est de dimensions suffisantes à ce qu'un arbre d'entraînement (13) destiné au galet presseur (12) peut passer par la douille de palier.

7. Dispositif selon la revendication 6, caractérisé en ce que l'arbre d'entraînement (13) est relié au galet presseur (12) par l'intermédiaire d'un embrayage à glissement (14).

8. Dispositif selon les revendications 2 et 6, caractérisé en ce que la douille de palier (15) porte en face extérieure les moyens de tourillonnement (19) destinés au levier (17) du galet de repressage (16).

9. Dispositif selon les revendications 2 et 8, caractérisé en ce que le levier (17) porte à son extrémité opposée au galet de repressage (16) une bague de palier (18), montée sur les moyens de tourillonnement (19) de la douille de palier (15) et portant en face extérieure la couronne dentée (20) pour la roue dentée (21) du dispositif de repressage.

10. Dispositif selon une ou plusieurs des revendications précédentes, avec un dispositif d'amenée (24) pour des bordures à entretoise, caractérisé en ce qu'un dispositif d'estampage ou de découpage destiné à couper l'entretoise est disposé sur le corps support (1).

11. Dispositif selon une ou plusieurs des revendications précédentes, caractérisé en ce que le dispositif de découpage (25) est réglable en inclinaison sur le corps support (1).

12. Dispositif selon une ou plusieurs des revendications précédentes, caractérisé en ce que le dispositif d'amenée (24) présente un dispositif (28) pour réaliser une ondulation à l'extrémité du matériau de bordure.

13. Dispositif selon la revendication 12, caractérisé en ce que le dispositif (28) présente au moins un préhenseur (29), pour maintenir à distance le matériau de bordure (K) vis-à-vis de l'arête de la pièce.

14. Dispositif selon les revendications 12 et 13, caractérisé en ce que le dispositif (28) présente au moins un galet (30) destiné à presser la bordure (K) sur l'arête de la pièce.

15. Dispositif selon la revendication 5, caractérisé en ce que le capteur de joint d'arête (27) est un capteur électromécanique ou optoélectrique.
